# EUROPEAN PATENT APPLICATION

(11) **EP 0 917 821 A1**
(43) Date of publication of application: **26.05.1999**
(21) Application number: 97309323.0
(22) Date of filing: 19.11.1997
(51) Int. Cl.: A01K 63/06

(54) **Fish tank with illuminating device**

(71) Applicant: Hirose Co., Ltd., Narashino-city, Chiba 275-0026 (US)
(72) Inventor: Nakamura, Yasushi, Narashino-city, Chiba 275 (JP)
(74) Representative: Haley, Stephen

(57) **Abstract**

A water tank (1) with an illuminating device comprises a source of light (3) and a condenser (4) positioned outside the water tank and below the bottom thereof. A light guide (2) made of a transparent material guides the condensed light upwards, with the top end (6) of the light guide (2) positioned above the level of water in the water tank (1). A reflecting surface (6) reflects the guided light down toward the water tank. The water tank (1) is illuminated from above without locating any illuminating device atop.

## Description

This invention relates to an improvement in the illumination of tanks for keeping seawater fish, freshwater fish, etc.

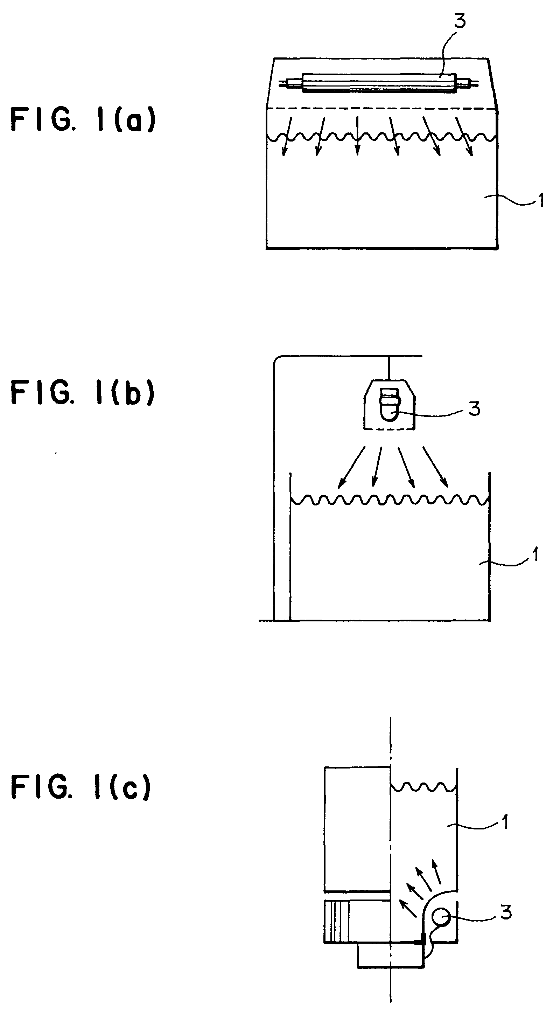

Generally, a source of light 3 for a water tank 1 to keep fish is attached to the top cover thereof as shown in Fig. 1(a) or suspended from above as shown in Fig. 1(b).

An illuminating device in such a position may fall when maintenance or feeding is done or may interfere with the observation of the tank from above.

There is also known an arrangement that places a source of light 3 in the lower side of a water tank 1 as shown in Fig. 1(c). However, when fish are viewed from above, the light illuminates not the upper side but the lower side of fish. This type of illumination is therefore inferior from the viewpoint of lighting effect and aesthetic quality.

The object of this invention is to provide a water tank with an illuminating device that permits lighting from above without placing a source of light above the water tank and overcomes the shortcomings in the conventional illumination devices for water tanks.

To achieve the object of this invention described above, a water tank with an illuminating device according to this invention comprises a source of light and a condenser positioned outside the water tank and below the bottom thereof, a light guide made of a transparent material to guide the condensed light upwards, with the top end of the light guide positioned above the level of water filled in the water tank, and a reflecting surface to reflect the guided light toward the water tank below.

In the drawings:
Fig. 1 shows side elevations of the construction of conventional illuminating devices; (a) and (b) show illuminating devices located above the water tank and (c) shows a device located below the water tank.
Fig. 2 show the basic construction of a illuminating device according to this invention; (a) shows the overall construction of a illuminating device and (b) shows a variation with a condenser differing from the one shown in (a).
Fig. 3 show the cross-sections of reflecting surfaces at the top of a illuminating device that differs from the one shown in Fig. 2(a); (a) shows a reflecting surface provided on the outer upward-looking surface of a hemisphere, (b) shows a reflecting surface formed by positioning a mirror away from a transparent member, and (c) shows a reflecting surface provided on the inner downward-looking surface of a hemispherical hollow positioned away from a transparent member.
Fig. 4 is a cross-sectional side elevation of a first embodiment.
Fig. 5 is a cross-sectional side elevation of a second embodiment.
Fig. 6 is a cross-sectional side elevation of a third embodiment.

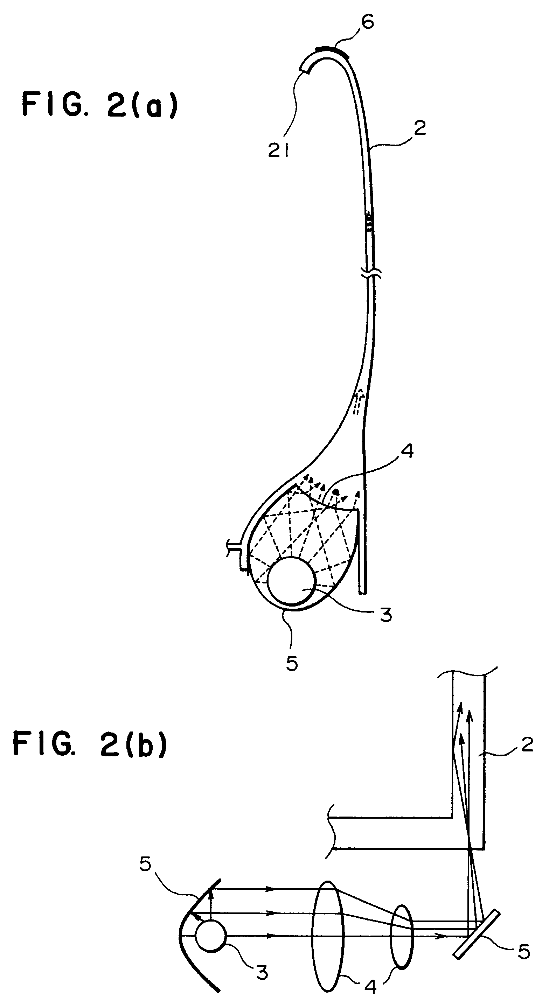

The illuminating device of this invention comprises a source of light 3 positioned outside of a water tank 1 and below the bottom thereof. A condenser 4 gathers light and directs it to a light guide 2 made of a transparent material and extending upward, as shown in Fig. 2(a).

The light guide 2 serves also as a condenser lens 4 that is formed at one end of the transparent member as shown in Fig. 2(a). This invention is by no means limited to the embodiment just described. For example, the condenser 4 may be positioned away from the light guide 2, as shown in Fig. 2(b).

To achieve efficient gathering of light, a reflecting surface 5 should be provided around the light source 3 so that reflected light is also gathered, as shown in Fig. 2(a) and (b).

The reflecting surface 5 shown in Fig. 2(b) is parabolically curved in cross section and the focus of the parabolic reflecting surface coincides with the center of the light source 3. Then, the beams of light reflected by the reflecting surface 5 are horizontally directed to the condenser lens 4, thus assuring efficient gathering of light.

The light beams directed to the light guide 2 made of the transparent member travel upward therethrough. Although the travelling light beams may hit the wall of the transparent member, the incidence angle of such light beams with respect to the wall can be made larger than the critical angle, that is the angle equal to the minimum angle required for the light beams to become refracted outside the guide, by proper design consideration. In general, therefore, the light continues upward travel while being reflected by the wall of the transparent member, rather than refracted outside.

A reflecting surface 6 is provided at the top of the light guide 2. In the embodiment shown in Fig. 2(a), the upper part of the transparent member is gradually bent so that a light-releasing end 21 droops, and the reflecting surface 6 is provided on the outside surface of the curved top.

The light reflected by the reflecting surface 6 of this profile is directed downward from the curved surface of the transparent member or the light-releasing end 21 at the tip thereof.

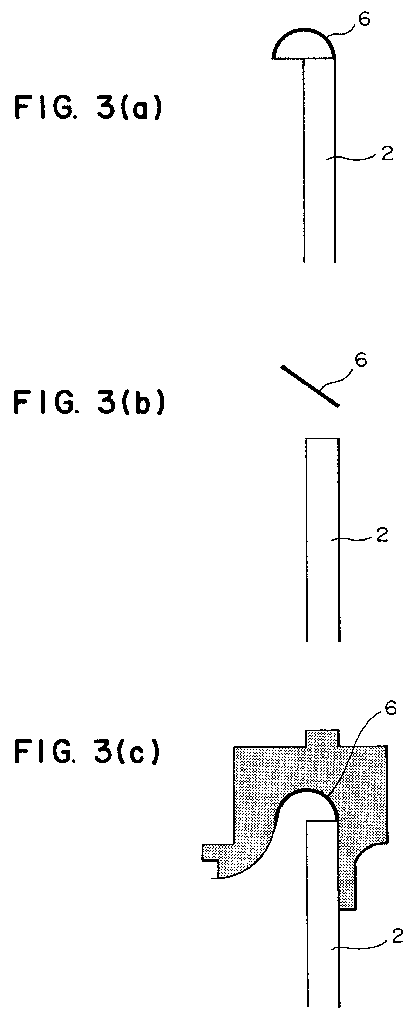

The profile of the reflecting surface 6 coated on the top of the transparent member is not limited to the one shown in Fig. 2(a). For example, the reflecting surface may be coated on the hemispherical surface of a transparent material as shown in Fig. 3(a).

Furthermore, the reflecting surface 6 may be positioned away from the transparent member as shown in Fig. 3(b). Even this reflecting surface directs the light to the water tank located therebelow.

In addition to the example in Fig. 3(b), the reflecting surface 6 may also be provided on the inner downward-looking surface of a hemispherical hollow positioned away from the transparent member as shown in Fig. 3(c).

According to this invention, as is apparent from the above, the light guide 2 made of a transparent material guides the light from the light source 3 to above the water tank 1 and the light reflected by the reflecting mirror 6 atop illuminates the surface of water in the water tank 1 located below.

The transparent material may be selected from plastic, glass, crystallized quartz or another transparent substance.

The transparent material may be either coloured or colourless. When the transparent material is coloured, the light coloured thereby illuminates the water tank 1.

The reflecting surface 6 at the top of the light guide 2 and the reflecting surface 5 near the light source can be formed by vapour deposition of aluminum, but is not limited thereto.

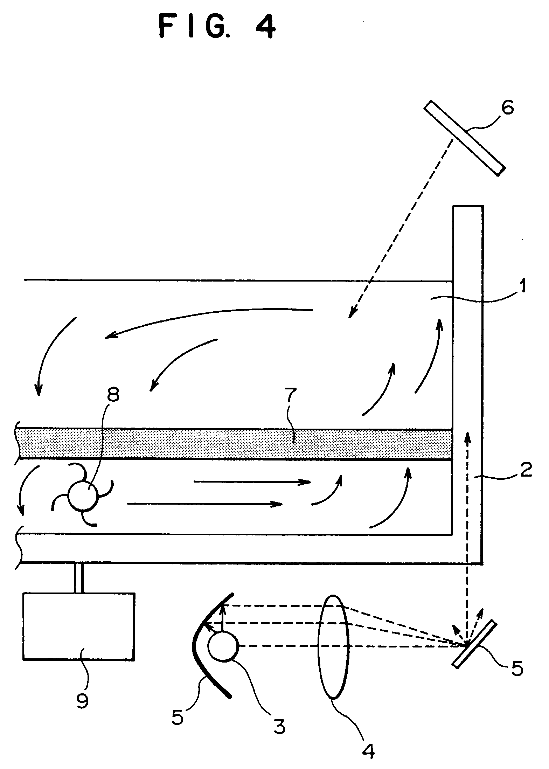

In a first embodiment, the light guide 2 made of a transparent material serves also as the wall of the water tank as shown in Fig. 4. (The transparent light guide shown in Fig. 4 as in the embodiment shown in Fig. 2(a), serves also as the condenser 4 and forms a Fresnel lens.

Light from the light source 3 travel upward through the wall of the water tank and are reflected by the reflecting mirror 6 atop of the surface of water in the water tank 1.

Conventional water tanks usually have a water circulating device located on top thereof. By contrast, the first embodiment described above permits locating a propeller to circulate water in the water tank 1 below a filter layer 7 and a motor 9 to rotate the propeller outside the water tank 1 and below the bottom thereof. The water tank having neither of the light source 3 and the circulating device atop is easy to service and of pleasant appearance.

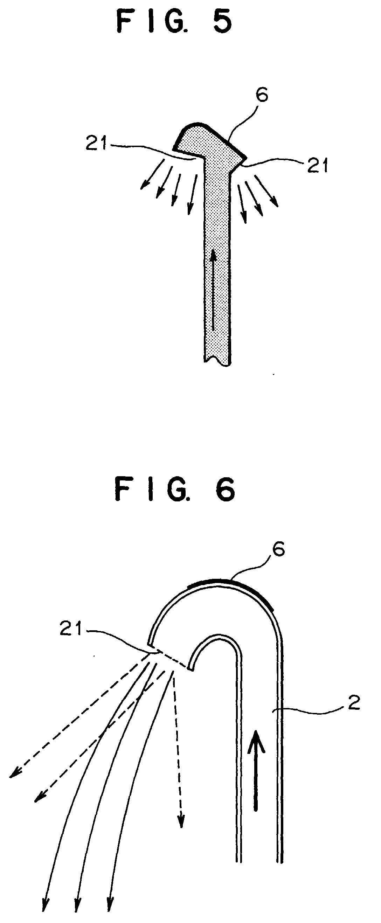

A second embodiment has the reflecting surface 6 provided on the inclined surfaces on both sides (front and back) of the highest point of the transparent light guide, as shown in Fig. 5.

This reflecting surface scatters light widely. When the transparent material forms the wall of the water tank, the water tank 1 serves also as a desk lamp, with one of the light releasing ends 21 releasing light for illumination.

A third embodiment has a hollow transparent light guide as shown in Fig. 6. The propeller 8 sends water upward from below the transparent light guide. The water then falls from the light releasing end provided at the top of the light guide.

The third embodiment that sends water from below the transparent light guide requires a separate condenser 4 as shown in Fig. 2(b) because the transparent light guide does not serve as the condenser 4 as shown in Fig. 2(a).

The light-releasing end 21 of the third embodiment allows water to fall (as indicated by solid arrows) and releases light for illumination (as indicated by dotted arrows). The varying motion of the falling water affects the direction of illuminating light, thereby adding dynamic variations to illumination. The illumination thus obtained produces fantastic effects unobtainable from conventional illumination.

As can be understood from the above, this invention permits the illumination of water tanks from above without providing any illuminating device on top thereof. Thus, this invention affords ease of maintenance, beautiful appearance and efficient illumination.

Additional merits can be obtained by combining the features incorporated in the first, second and third embodiments.

Thus, this invention introduces an extremely useful improvement in the illumination of water tanks.

## Claims

1. A water tank with an illuminating device comprising a source of light and a condenser positioned outside the water tank and below the bottom thereof, a light guide made of a transparent material to guide the condensed light upwards, with the top end of the light guide positioned above the level of water in the water tank in use, and a reflecting surface to reflect the guided light down toward the water tank.

2. A water tank with an illuminating device according to claim 1, in which the upper part of the light guide is gradually curved so that a light-releasing end at the tip thereof looks downward and a reflecting surface is formed on the outer surface of the curved part of the light guide.

3. A water tank with an illuminating device according to claim 1, in which a reflecting surface is provided on each side of the highest point of the light guide.

4. A water tank with an illuminating device according to any preceding claim, in which the light guide serves also as the frame of the water tank.

5. A water tank with an illuminating device according to any preceding claim, in which a propeller to circulate water in the water tank is provided, in use, below a sand layer floor and a motor is provided outside the water tank to rotate the propeller.

6. A water tank with an illuminating device according to claim 1, in which the transparent light guide has a hollow space on the inside and the water in the water tank, in use, is circulated therethrough.
